# EUROPEAN PATENT APPLICATION

(11) **EP 1 802 119 A1**
(43) Date of publication of application: **27.06.2007**
(21) Application number: 05781784.3
(22) Date of filing: 01.09.2005
(51) Int. Cl.: H04N 7/16, H04N 7/173

(54) **METHOD FOR PROTECTING BROADBAND VIDEO AND AUDIO BROADCAST CONTENT**

(30) Priority: 01.09.2004 CN 200410075343
(71) Applicant: Huawei Technologies Co., Ltd., Longgang District, Shenzhen Guangdong 518129 (CN)
(72) Inventor: LI, Jun, Huawei Administration Building, Shenzhen, Guangdong 518129 (CN)
(74) Representative: Manitz, Finsterwald & Partner GbR
(86) International application number: PCT/CN2005/001378
(87) International publication number: WO 2006/024233

(57) **Abstract**

Embodiments of the present invention disclose a method and a system for protecting contents of a broadband video / audio broadcast, which solves the problem of poor security concerning the video / audio broadcast on a broadband network of the prior art. In the method a multicast entitlement control list is kept in a broadcast access device and when a subscriber requests to receive a channel, the broadcast access device verifies, according to the multicast entitlement control list, whether the subscriber is entitled to receive the channel, adds the subscriber into a corresponding multicast group only when the subscriber is entitled, and transmits the contents of the multicast group only to the members of the multicast group.

## Description

### Field of the Technology

The present invention relates to broadband video / audio technologies in a telecommunication network, and particularly, to a method for protecting contents of a broadband video / audio broadcast.

### Background of the Invention

In a cable TV network, video / audio streams need to be encrypted or scrambled before being broadcast to a network and eventually to subscriber terminals. The subscriber terminals which have received the video / audio streams, acquire a key from the network and decrypted or de-scrambled the video / audio streams. Different keys are used for encrypting or scrambling different channels or channel groups so that a subscriber can only watch the channels which the subscriber is entitled to watch. The keys are broadcast to all subscriber terminals, and thus a complicated key management and encryption algorithm as well as frequent real-time key update are adopted, so as to assure that the keys will not be easily cracked. Two problems are expected to be solved through an end-to-end encryption / scramble manner: an entitlement of channel, i.e., a subscriber can only watch the channels which the subscriber is entitled to watch, and a digital copy prevention.

Method for protecting contents of video / audio broadcast in prior art may have the following disadvantages:
(1) even though contents of the video / audio programs are encrypted or scrambled, a subscriber terminal may receive contents of all the channels once the terminal has obtained the keys, no matter the terminal is entitled or not, hence a subscriber who obtains the keys through illegal ways can watch all the programs;
(2) the keys are transmitted online and are thus easy to be cracked;
(3) the keys need frequent update, which occupies much bandwidth;
(4) algorithms used for key encryption, decryption and management are complicated and thus the cost thereof is high;
(5) the encryption or scramble algorithm is associated with the coding format of specific video / audio programs and thus is poor concerning adaptability;
(6) no solution is available when the encryption / decryption algorithm is cracked.

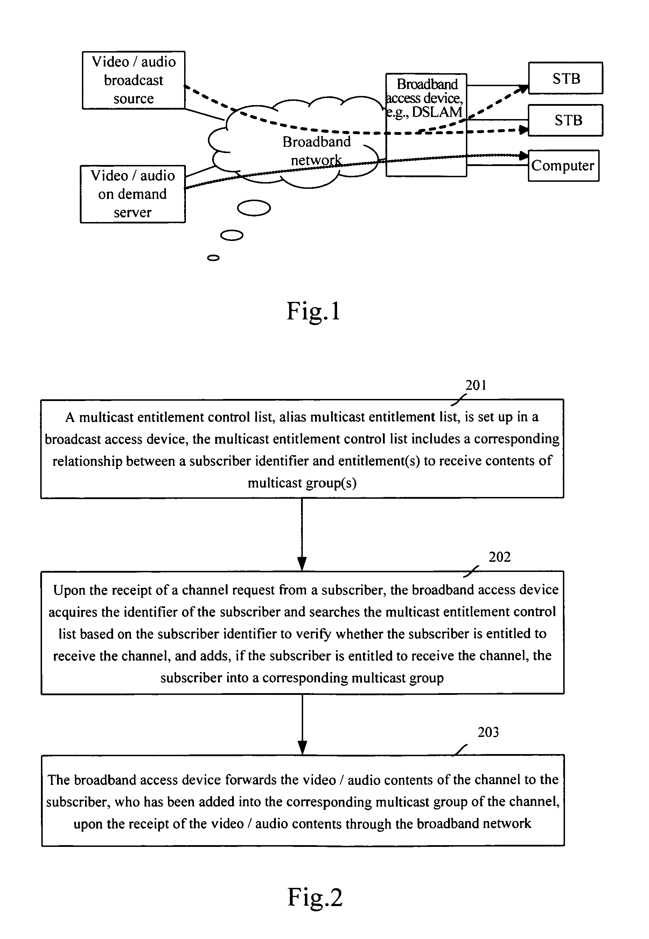

Broadband access technologies of the prior art, represented by a Digital Subscriber Loop (DSL), provide data services such as an internet access as well as video / audio services including a broadband television service, an audio broadcast service, a video / audio on demand service, etc. Video / audio services are usually transmitted through Set-Top Boxes (STBs) or computers which are connected to a network and able to obtain video / audio contents through the network. The video /audio on demand service is usually carried by unicast traffic, while TV services as well as audio broadcast services are carried by multicast traffic. Figure 1 shows a model of a network in which such services are transmitted.

It is important to assure content security while applying TV services and audio broadcast services on a broadband network. The content security includes two requirements: firstly, the entitlement of channel, i.e., a subscriber can only listen to /watch the channels which the subscriber is entitled to receive, and secondly, the digital copy prevention, i.e., a subscriber cannot perform an illegal digital copy of the channel contents. No safeguard measures are taken to protect contents of video / audio broadcast on a broadband network of the prior art, therefore contents security cannot be guaranteed and security level of the broadband network in the prior art is low, which makes it difficult to operate video / audio broadcast services on the broadband network.

### Summary of the Invention

Embodiments of the present invention provide a method and a system for protecting contents of a broadband video / audio broadcast.

Embodiments of the present invention present the technical solutions as follows:

A method for protecting contents of a broadband video / audio broadcast, includes the following processes:
generating, by a video / audio broadcast source, the contents of a broadband video / audio broadcast;
transmitting, by a broadband network and a broadband access device, the contents of the broadband video / audio broadcast to a subscriber terminal in an Internet Protocol (IP) packet format;
setting up, in the broadband access device, a multicast entitlement control list which records a corresponding relationship between a subscriber identifier and entitlement(s) to contents of multicast group(s);
acquiring a subscriber identifier, by the broadband access device, upon the receipt of a channel request from a subscriber, and searching through the multicast entitlement control list based on the subscriber identifier to verify whether the subscriber is entitled to receive a channel, and adding, if the subscriber is entitled to receive the channel, the subscriber into a multicast group corresponding to the channel;
forwarding the video / audio contents of the channel to the subscriber, who has been added into the multicast group corresponding to the channel, by the broadband access device upon the receipt of the video / audio contents through the broadband network.

The process of forwarding the video / audio contents of the channel to the subscriber includes:
encapsulating, by the broadband access device the video / audio contents of the channel exported by the video / audio broadcast source, into an IP packet and scrambling an IP packet payload at a designated position based on a key and a predetermined scramble algorithm;
transmitting the scrambled IP packet through the broadband network to the broadband access device;
forwarding the IP packet by the broadband access device to the subscriber in the multicast group corresponding to the channel; and
after the broadband access device forwarding the IP packet to the subscriber in the multicast group corresponding to the channel, the method further includes the following processes:
   de-scrambling the IP packet payload at the designated position, according to the key and a de-scramble algorithm corresponding to the scramble algorithm, by the subscriber terminal upon the receipt of the IP packet.

Information of the entitlement(s) to contents of multicast group(s) includes information of a channel group that the subscriber is entitled to access; or includes information of entitlement(s) granted to the subscriber by all the multicast groups.

If a scrambling side and a de-scrambling side keep the same key database, the process of scrambling further includes:
extracting contents of first part of the IP packet payload and calculating to obtain the position of a field to be scrambled and a key index;
obtaining a key from a local key database according to the key index;
scrambling contents of the designated field of the IP packet, with the contents of the first part excluded, based on the obtained key and the position of the field to be scrambled.

If a scrambling side and a de-scrambling side keep the same key database, the process of de-scrambling further includes:
extracting contents of first part of the scrambled IP packet payload and calculating, based on the same algorithm adopted in the step of scrambling, to obtain a key index and the position of a scrambled field;
obtaining a key from a local key database according to the key index;
de-scrambling the scrambled field in the IP packet based on the position of the scrambled field and the key.

If a scrambling side and a de-scrambling side keep the same key seed database, the process of scrambling further includes:
extracting contents of first part of the IP packet payload and calculating to obtain position of the field to be scrambled and a key seed index;
obtaining a key seed from a local key seed database according to the key seed index and generating a key based on the key seed;
scrambling contents of the designated field of the IP packet, with the contents of the first part excluded, based on the generated key and the position of the field to be scrambled.

If a scrambling side and a de-scrambling side keep the same key seed database, the process of de-scrambling further includes:
extracting contents of first part of the payload in the scrambled IP packet and calculating, based on the same algorithm adopted in the process of scrambling, to obtain a position of the scrambled field and a key seed index;
obtaining a key seed from a local key seed database according to the key seed index and generating a key based on the key seed;
de-scrambling the scrambled field in the IP packet based on the position of the scrambled field and the key.

The contents of the first part of the payload vary with the contents of the IP packet.

The subscriber identifier includes a subscriber port identifier, a Permanent Virtual Connection (PVC) / a Virtual Local Area Network (VLAN) identifier of the subscriber port or the combination of the two items, or the subscriber IDentification (ID).

Embodiments of the present invention have the following beneficial results.
1) An entitlement of channel: a multicast entitlement control is performed by a broadband access device, which ensures that a subscriber can only receive contents of the channels which the subscriber is entitled to receive and the subscriber is unable to receive contents of the channels to which the subscriber is unentitled. Even when the digital scramble algorithm is cracked, the subscriber can never receive contents of the channels to which the subscriber is unentitled, that is, the subscriber cannot watch the channels to which the subscriber is unentitled, which ensures that channels will not be watched without permission and protects the benefit of operators.
2) A digital copy prevention: video / audio streams are scrambled, based on digital scramble technology while being transmitted, to ensure that only legally entitled terminals may de-scramble the streams and watch the contents, therefore a subscriber cannot obtain the digital copy of the video / audio streams directly for another general terminals to watch. The digital scramble technology prevents keys from being spread on networks, lowers risk of the keys being cracked and reduces extra network bandwidth consumption. Besides, the adopted algorithm which is irrelevant to video /audio codec technology, scrambles payload of an IP packet directly and is applicable to different video/audio codec technologies. In the digital scramble technology, no complicated key management technology and encryption algorithm is required and no extra difficulty or cost will be brought to a Set-Top Box (STB) of the terminal, thus cost of headend equipment can be reduced. Even when the scramble algorithm is cracked, the problem can be fixed in time by synchronous update of the algorithm / key at the headend equipment and the terminal over the network.
3) A highly efficient and safe method for protecting contents of broadband TV and broadband digital broadcast, which is based on a multicast entitlement control performed by a broadband access device and the digital scramble technology, without extra investment and extra network bandwidth demand. Combination of the entitlement of channel and the digital copy prevention forms a highly reliable, efficient and low-cost method for protecting contents of broadband TV and broadband digital broadcast.

### Brief Description of the Drawings

Figure 1 shows a networking model of a broadband video / audio application in the prior art.
Figure 2 is a flow chart of the method in accordance with an embodiment of the present invention.
Figure 3 is a schematic diagram illustrating a structure of a multicast entitlement control list.
Figure 4 is a schematic diagram illustrating a network for protecting contents of a broadband video / audio broadcast in accordance with an embodiment of the present invention.
Figure 5 is a schematic diagram illustrating processes of scramble and de-scramble in accordance with an embodiment of the present invention.

### Embodiments of the Invention

Embodiments of the present invention adopt different network functional entities to deal with two crucial concerns in video / audio content protection: an entitlement of channel and a digital copy prevention. The entitlement of channel is achieved through a multicast entitlement control performed by a broadband access device and the digital copy prevention is achieved through a digital scramble technology.

Contents of a broadband TV or a broadband digital broadcast are transmitted to a subscriber by a broadband access device through multicast. As a broadband network is bidirectional, in embodiments of the present invention the broadband access device is used for performing multicast entitlement control and further for controlling whether a subscriber is able to receive contents of a channel, the entitlement of channel is thus achieved. It should be noted that, in a network device one channel corresponds to one multicast group and one subscriber may subscribe for one or multiple channels.

The network structure adopted in embodiments of the present invention is introduced herein to make the technical scheme of the present invention more apparent. As shown in Figure 1, a system adopted in embodiments of the present invention includes a video / audio broadcast source, a broadband network, a broadband access device and subscriber terminals. The video / audio broadcast source is used for producing video / audio broadcast contents for different channels. The broadband network is used for transmitting the broadcast contents exported by the video / audio broadcast source. The broadband access device is used for transmitting the broadcast contents of different channels, which is received from the broadband network, to subscriber terminals through multicast. And the subscriber terminals are used for receiving the video / audio broadcast contents of one or multiple channels.

As shown in Figure 2, a method provided by embodiments of the present invention and applied to the system described above includes the following steps.

Step 201: setting up a multicast entitlement control list, alias a multicast entitlement list, in a broadband access device to record multicast group(s) which a subscriber is entitled to access. The multicast entitlement control list includes a corresponding relationship between the identifier of a subscriber and the entitlement information granted to the subscriber for receiving contents of a multicast group or groups. The subscriber identifier includes a port through which the broadband access device receives the subscriber information, the Permanent Virtual Connection (PVC) /Virtual Local Area Network (VLAN) of the subscriber port or the combination of the two items, or the identity of the subscriber terminal. Thus, information of the multicast group(s) which the subscriber is entitled to access can be obtained by searching the multicast entitlement control list with reference to the subscriber identifier.

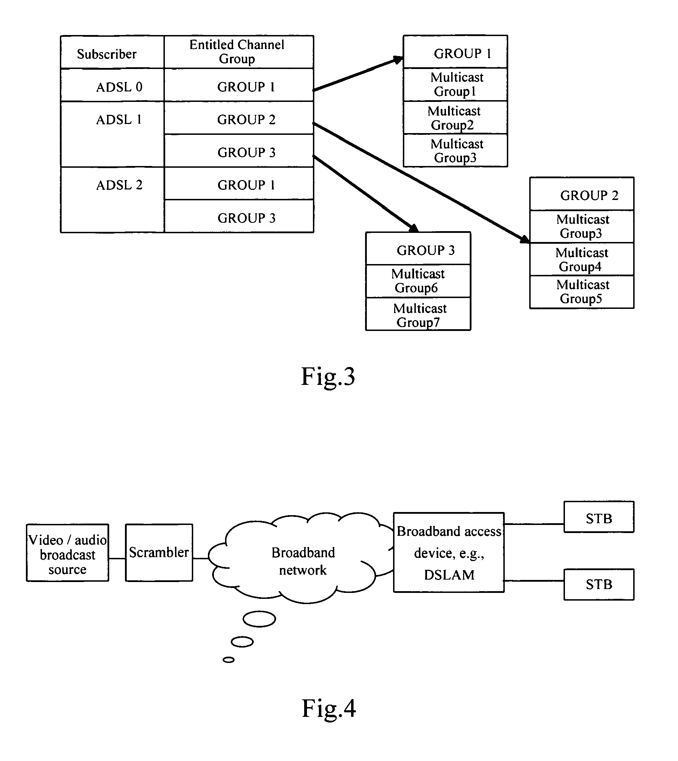

The information of the multicast group(s) which the subscriber is entitled to access may include information of the channel group(s) which the subscriber is entitled to access. The information of the channel group(s) to which the subscriber is entitled to access includes an information combination of the channel(s) that the subscriber is allowed to receive. A channel group may include one or multiple channels. As shown in Figure 3, the multicast entitlement control list includes the subscriber identifiers and the information of the channel group(s) to which subscribers are entitled. As one channel corresponds to one multicast group, a channel group includes multiple multicast groups. In Figure 3, ADSL 0, ADSL 1 and ADSL 2 are subscriber identifiers indicating three different subscribers. The channel group which ADSL 0 is entitled to access is Group 1, which includes Multicast Groups 1, 2 and 3. The channel groups which ADSL 1 is entitled to access are Groups 2 and 3, in which Group 2 includes Multicast Groups 3, 4 and 5 and Group 3 includes Multicast Groups 6 and 7.

It is obvious that the information of the multicast group(s) which a subscriber is entitled to access may also include information of the entitlement granted to the subscriber by all the multicast groups. As shown in Figure 1, the multicast entitlement control list includes a subscriber identity and the information of entitlement granted to the subscriber by all the multicast groups. ADSL 0, ADSL 1 and ADSL 2 are subscriber identifiers indicating three different subscribers. "Y" in Table 1 indicates the reception is entitled and "N" indicates the reception is denied. For example, ADSL 0 is entitled to receive Multicast Groups 1, 2 and 3 and is forbidden to receive Multicast Groups 4, 5, 6, 7 and 8. The multicast group(s) which the subscriber is entitled to access can be learned through searching Table 1 with reference to the subscriber identifier. Taking Table 1 as an example, supposing Channel 1 corresponds to Multicast Group 1, a broadband access device, upon the receipt of requests to receive contents of Channel 1 from ADSL 0, ADSL 1 and ADSL 2, searches Table 1 and learns that only ADSL 0 and ADLS 2 are entitled to receive contents of Channel 1, therefore the broadband access device adds ADSL 0 and ADSL 2 into Multicast Group 1 and refuses the request from ADSL 1. Upon the receipt of the video / audio streams of Channel 1, the broadband access device forwards the streams to ADSL 0 and ADSL 2 in Multicast Group 1 only, and ADSL 1 is thus unable to receive contents of Channel 1.

**Table 1**

| Subscriber | Authorization Information | | | | | | | |
|---|---|---|---|---|---|---|---|---|
| | Multicast Group 1 | Multicast Group 2 | Multicast Group 3 | Multicast Group 4 | Multicast Group 5 | Multicast Group 6 | Multicast Group 7 | Multicast Group 8 |
| ADSL0 | Y | Y | Y | N | N | N | N | N |
| ADSL1 | N | N | Y | Y | Y | Y | Y | N |
| ADSL2 | Y | Y | Y | N | N | Y | Y | N |

Step 202: acquiring the identifier of the subscriber by the broadband access device upon the receipt of a channel request from the subscriber, and searching through the multicast entitlement control list based on the subscriber identifier to verify whether the subscriber is entitled to receive the channel, and adding, if the subscriber is entitled to receive the channel, the subscriber into corresponding multicast group.

When a subscriber terminal accesses a broadband network by cable, the subscriber identifier may include a port through which the broadband access device receives the subscriber information, the PVC / VLAN of the subscriber port or the combination of the two items. When a subscriber terminal accesses a broadband network by radio, the subscriber identifier includes the subscriber IDentification (ID) of the subscriber terminal which is carried by the request. The subscriber ID may be a piece of unique information used for identifying the subscriber terminal, e.g., an International Mobile Subscriber Identity (IMSI), the number of the subscriber.

Step 203: forwarding the video / audio contents of the channel to the subscriber, who has been added into a multicast group corresponding to the channel, by the broadband access device upon the receipt of the video / audio contents through the broadband network. In such way a subscriber who is entitled to receive a channel can actually receive the video / audio streams of the channel.

It can be concluded from the fore-going descriptions that the entitlement of channel can be achieved effectively through the multicast entitlement control performed by a broadband access device, therefore a subscriber can be stopped from listening to / watching channels which the subscriber is not entitled to receive. The broadband access device determines the source of a request according to the subscriber identifier and judges whether the request should be permitted based on the multicast entitlement information of the subscriber, hence it is hard for a subscriber terminal to obtain contents of a channel illegally by disguising and the method can thus offer high security and stop a subscriber from receiving a channel unentitled.

In order to further assure the content security, embodiments of the present invention adopt the digital scramble technology to process contents of the video/audio streams on the basis of the entitlement of channel and thus to prevent digital copy.

As shown in Figure 4, a scrambler is added into the system described above and the scrambler is used for receiving video / audio broadcast contents exported by the video / audio broadcast source, encapsulating the video / audio broadcast contents into an IP packet, scrambling the IP packet and transmitting the scrambled IP packet to the broadband network. And then, the broadcast network forwards the scrambled IP packet to the broadband access device. The broadband access device transmits the scrambled IP packet according to the local multicast group information. Upon the receipt of the IP packet, the subscriber terminal de-scrambles the scrambled video /audio broadcast contents.

It should be noted that the implementation of the digital scramble technology includes the following processes.
1) Scrambling only the payload of the IP packet, and the scramble technology is irrelevant to the contents of the payload.
2) Leaving the contents of the first part of payload unscrambled since the first part of the IP packet payload, the length of which can be configured, may be used for transmitting protocol information.
3) Implementing a scramble position generation algorithm, a key seed index generation algorithm, a key generation algorithm and a scramble and de-scramble algorithm on the scrambler and the subscriber terminal, and keeping the same key seed databases on both the scrambler and the subscriber terminal.

The scramble position generation algorithm may include a private algorithm, e.g., a combination of an XOR algorithm and an HASH algorithm. The key seed index generation algorithm and the key generation algorithm may include a private algorithm, e.g., a combination of Haval and MD5 algorithms. The scramble and de-scramble algorithm may include a 3DES, a 3DES or an AES algorithm.

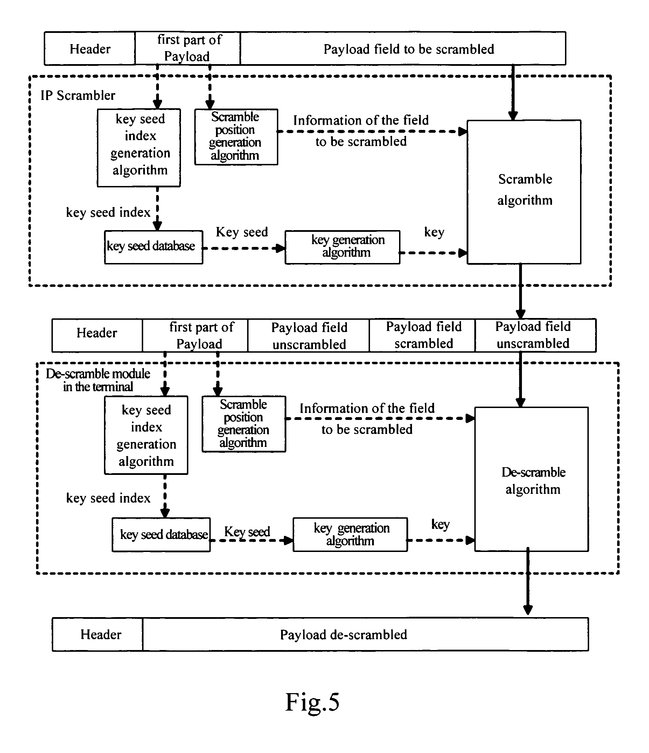

As shown in Figure 5, the scramble process includes the following steps.
1) Extracting contents of the first part of the IP packet payload by the scrambler based on the scramble position generation algorithm and the key seed index generation algorithm. The contents of the first part of the IP packet payload are not fixed, but vary with the contents of the IP packet.
2) Calculating to obtain corresponding information of the position to be scrambled, i.e., the starting / ending point of the field to be scrambled in the packet, based on the scramble position generation algorithm, and calculating to obtain a key seed index based on the key seed index generation algorithm.
3) Searching for a corresponding key seed by the scrambler from a local key seed database according to the obtained key seed index.
4) Calculating to obtain a key by the scrambler based on the key seed through the key generation algorithm.
5) Scrambling the designated field of the IP packet by the scrambler with the predetermined scramble algorithm and based on the generated key as well as the information of the position to be scrambled.

The process of de-scrambling includes the following steps.
1) Extracting contents of the first part of the IP packet payload by the subscriber terminal, upon the receipt of the scrambled packet based on the same scramble position generation algorithm and the key seed index generation algorithm as the scrambler. The contents of the first part of the IP packet are the same as the contents extracted in Step 1) of the scrambling process.
2) Calculating to obtain corresponding information of the position to be scrambled, i.e., the starting / ending point of the field to be scrambled in the packet, based on the scramble position generation algorithm, and calculating to obtain the key seed index based on the key seed index generation algorithm.
3) Searching for a corresponding key seed by the subscriber terminal from a local key seed database according to the obtained key seed index.
4) Calculating to obtain a key by the subscriber terminal based on the key seed through the key generation algorithm.
5) De-scrambling the designated scrambled field by the subscriber terminal with the predetermined de-scramble algorithm and based on the generated key and the information of the scrambled position.

An equivalent variation of the scramble and de-scramble processes includes the following steps. Keeping the same key by both the scrambler and the subscriber terminal, generating a key index with the key index generation algorithm instead of the key seed index generation algorithm, and obtaining the key directly from the key database according to the key index to scramble or de-scramble the packet.

The digital scramble technology described herein demonstrates the following features.
1) The digital scramble technology is irrelevant to any specific video / audio codec technology while only the payload of an IP packet should be scrambled.
2) Occupying no extra bandwidth.
3) Offering a multi-layer encryption and multiple encryption algorithms.
4) Scrambling the packet dynamically based on contents of the packet and exchanging the scramble information dynamically.
5) Transmitting no key over a network.
6) A scrambler and a subscriber terminal are easy to be implemented and the cost of them is low.
7) The digital scramble technology has a high security, which means that a subscriber has to obtain the following information in order to crack the algorithm: the scramble and de-scramble algorithm, the scramble position generation algorithm, the key seed index generation algorithm, all the key seeds in the key seed database and the key generation algorithm.
8) The algorithm and key seed can be updated in time by updating a client application online.

## Claims

1. A method for protecting contents of a broadband video / audio broadcast, comprising:
generating, by a video / audio broadcast source, the contents of a broadband video / audio broadcast;
transmitting, by a broadband network and a broadband access device, the contents of the broadband video / audio broadcast to a subscriber terminal in an Internet Protocol (IP) packet format;
setting up, in the broadband access device, a multicast entitlement control list which records a corresponding relationship between a subscriber identifier and entitlement(s) to contents of multicast group(s);
acquiring a subscriber identifier, by the broadband access device, upon the receipt of a channel request from a subscriber, and searching through the multicast entitlement control list based on the subscriber identifier to verify whether the subscriber is entitled to receive a channel, and adding, if the subscriber is entitled to receive the channel, the subscriber into a multicast group corresponding to the channel;
forwarding the video / audio contents of the channel to the subscriber, who has been added into the multicast group corresponding to the channel, by the broadband access device upon the receipt of the video / audio contents through the broadband network.

2. The method according to Claim 1, wherein the process of forwarding the video / audio contents of the channel to the subscriber comprises:
encapsulating, by the broadband access device the video / audio contents of the channel exported by the video / audio broadcast source, into an IP packet and scrambling an IP packet payload at a designated position based on a key and a predetermined scramble algorithm;
transmitting the scrambled IP packet through the broadband network to the broadband access device;
forwarding the IP packet by the broadband access device to the subscriber in the multicast group corresponding to the channel; and
after the broadband access device forwarding the IP packet to the subscriber in the multicast group corresponding to the channel, the method further comprising:
de-scrambling the IP packet payload at the designated position, according to the key and a de-scramble algorithm corresponding to the scramble algorithm, by the subscriber terminal upon the receipt of the IP packet.

3. The method according to Claim 1, wherein information of the entitlement(s) to contents of multicast group(s) comprises information of a channel group that the subscriber is entitled to access; or comprises information of entitlement(s) granted to the subscriber by all the multicast groups.

4. The method according to Claim 2, wherein if a scrambling side and a de-scrambling side keep the same key database, the process of scrambling further comprises:
extracting contents of first part of the IP packet payload and calculating to obtain the position of a field to be scrambled and a key index;
obtaining a key from a local key database according to the key index;
scrambling contents of the designated field of the IP packet, with the contents of the first part excluded, based on the obtained key and the position of the field to be scrambled.

5. The method according to Claim 2, wherein if a scrambling side and a de-scrambling side keep the same key database, the process of de-scrambling further comprises:
extracting contents of first part of the scrambled IP packet payload and calculating, based on the same algorithm adopted in the step of scrambling, to obtain a key index and the position of a scrambled field;
obtaining a key from a local key database according to the key index;
de-scrambling the scrambled field in the IP packet based on the position of the scrambled field and the key.

6. The method according to Claim 2, wherein if a scrambling side and a de-scrambling side keep the same key seed database, the process of scrambling further comprises:
extracting contents of first part of the IP packet payload and calculating to obtain position of the field to be scrambled and a key seed index;
obtaining a key seed from a local key seed database according to the key seed index and generating a key based on the key seed;
scrambling contents of the designated field of the IP packet, with the contents of the first part excluded, based on the generated key and the position of the field to be scrambled.

7. The method according to Claim 2, wherein if a scrambling side and a de-scrambling side keep the same key seed database, the process of de-scrambling further comprises:
extracting contents of first part of the payload in the scrambled IP packet and calculating, based on the same algorithm adopted in the process of scrambling, to obtain a position of the scrambled field and a key seed index;
obtaining a key seed from a local key seed database according to the key seed index and generating a key based on the key seed;
de-scrambling the scrambled field in the IP packet based on the position of the scrambled field and the key.

8. The method according to any one of Claims 4 to 7, wherein the contents of the first part of the payload vary with the contents of the IP packet.

9. The method according to Claim 1, wherein the subscriber identifier comprises a subscriber port identifier, a Permanent Virtual Connection (PVC) / a Virtual Local Area Network (VLAN) identifier of the subscriber port or the combination of the two items, or the subscriber IDentification (ID).
